# EUROPEAN PATENT SPECIFICATION

(11) **EP 1 494 012 B1**
(45) Date of publication and mention of the grant of the patent: **15.08.2007**
(21) Application number: 04253473.5
(22) Date of filing: 10.06.2004
(51) Int. Cl.: G01N 21/90, G01N 21/88, G06F 3/033, G06F 3/023

(54) **Container inspection machine with man-machine interface for identifying and defining back lights**
Maschine zur Inspektion von Behältern mit einer Mensch-Maschine-Schnittstelleneinheit zur Identifizierung und Bestimmung von Hintergrundbeleuchtungseinrichtungen
Appareil de contrôle de récipients avec une unité d'interface homme-machine pour identifier et définir des dispositifs d'éclairage par l'arrière

(30) Priority: 30.06.2003 US 610232
(43) Date of publication of application: 05.01.2005
(73) Proprietor: Emhart Glass S.A., 6330 Cham (CH)
(72) Inventor: Diehr, Richard D., Horseheads New York 14845 (US)
(74) Representative: Warren, Anthony Robert

(56) References cited:
- EP-A- 0 472 881
- EP-A- 1 070 958
- DE-A- 10 017 381
- US-A- 5 072 127
- US-A- 5 172 005
- US-A- 5 386 293
- US-A- 5 470 218
- US-B1- 6 452 156
- PATENT ABSTRACTS OF JAPAN vol. 017, no. 323 (P-1559), 18 June 1993 (1993-06-18) & JP 05 035388 A (KOKUSAI ELECTRIC CO LTD), 12 February 1993 (1993-02-12)
- "Inspection accuracy, flexibility and configurability" GLASS, MONTHLY JOURNAL OF THE EUROPEAN GLASS INDUSTRY, DMG WORLD MEDIA, 20 June 2003 (2003-06-20), page 150, XP002301548 REDHILL, SURREY, UK
- "VeritasTM meets the challenge; sets a new standard for glass container inspection" INTERNATIONAL GLASS REVIEW, vol. 2, 2002, XP002301549 LONDON, UK Retrieved from the Internet: URL:http://www.internationlglassreview.com /default.asp?Page=1&PubID=81&ISS=9550&SID= 387936&SM=ALL&SearchStr=veritas> [retrieved on 2004-10-15]

## Description

The present invention relates to machines which inspect containers such as bottles for defects.

Glass bottles are formed in a process which can produce defects which make the bottle unacceptable.

For example, the side wall of a bottle may include a "stone" which makes the bottle visually unacceptable, or the bottle may have a "bird swing" which could break off and become part of the contents of the bottle.

One of the crudest ways that a bottle is inspected is for an operator to remove a bottle from a conveyer and look through the bottle at a light source, i.e. a back light, within sight of the operator (a ceiling light for example). Operators believe that certain defects can be identified in this manner. Inspection equipment improves on this process and conventionally defines a light source which is part of an inspection station within a piece of inspection equipment. The inspection may be of a very simple form with an inspector watching bottles as they pass in front of a large opaque light screen but this light source may be inconvenient for the operator.

A camera may look through a bottle which is backlit by this light source and an inspection algorithm attempts to identify a defect. The back light may have a great variety of forms but defines either a diffuse back light or a patterned back light. One form of patterned back light is a black and white stripe such as would be defined by a light intensity having an intensity which varies linearly as a sine function.

Inspection machines of the latter type are disclosed in articles entitled "Inspection accuracy, flexibility and configurability" GLASS, MONTHLY JOURNAL OF THE EUROPEAN GLASS INDUSTRY, DMG WORLD MEDIA, 20 June 2003 (203-060-20), p.150, REDHILL, SURREY, UK, and "Veritas TM meets the challenge; sets a new standard for glass container inspection" INTERNATIONAL GLASS REVIEW, vol. 2, 2002 LONDON,UK.

The present invention is directed to a machine for inspecting a transparent container, generally of the type disclosed in the latter articles, and defined in the preamble of claim 1.

Emhart Glass Veritas^{™} series machines disclosed in the latter articles incorporate automated on-line machine vision systems. The machine systems include LED light panels to generate back lights for inspection of the containers by the machines as the containers travel through the machines. The machine systems also include man-machine screen interfaces, i.e. touch screens, all the functions of which are related to the machine systems and their operation.

In particular, the touch screens are used to set up the machine systems for a variety of job configurations.

Other machines for inspecting transparent containers, which incorporate inspection lights in machine vision inspection systems, and/or incorporate man-machine screen interfaces for setting up the machine systems, are disclosed in EP-A-0,472,881, US-A-5,172,005 and 5,072,127, and US-B-6,452,156.

It is an object of the present invention to provide the operator with a patterned or diffuse light source at an inspection machine that can back light a bottle or other transparent container to provide the operator with an improved way of carrying out a crude inspection of a bottle held in his hand.

According to the present invention, there is provided a machine for inspecting a transparent container as defined in the characterizing clause of claim 1.

The present invention will now be described with reference to the accompanying drawings, which illustrate a presently preferred embodiment incorporating the principles of the invention, and in which:
Figure 1 is a schematic oblique view of an inspection machine for inspecting bottles which includes a controller and a screen which functions as a man-machine interface;
Figure 2 is a logic diagram illustrating how the screen can be operated as a light source; and
Figure 3 is a front view of the screen illustrating how an operator would define a desired light source that he could use for inspection purposes.

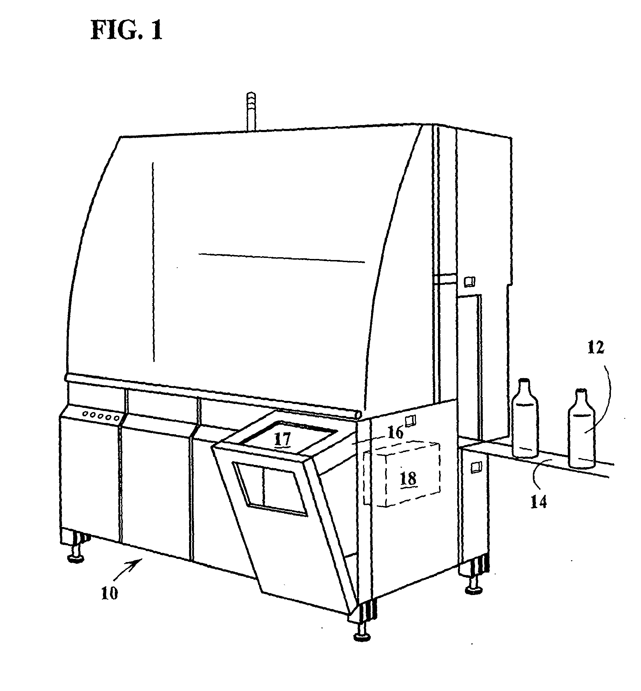

Figure 1 is a schematic showing of an inspection machine 10 which inspects a row of bottles 12 conveyed through the machine on a conveyor 14. Any of a variety of inspections can be carried out by the machine. For example the bottle can be inspected to determine the mold information that the producer puts on the bottle so that defects can be correlated with the mold in which the bottle was made. The opening of the bottle can be inspected to make sure that the I.D. (inner diameter) and O.D. (outer diameter) are acceptable. The sides of the bottle can be inspected to make sure that they are vertical and have no defects such as thin or thick spots.

The inspection machine has an operator console 16 which includes a man-machine interface in the form of a touch screen 17. With this screen, the operator can perform numerous functions relating to the operation of the machine. The screen is controlled by a computer 18 and the screen could be a LCD (liquid crystal diode) screen.

The operator can also select one of a plurality of back lights and/or back light patterns to be generated by, and defined and displayed on, the screen, to be used by the operator when inspecting a container.

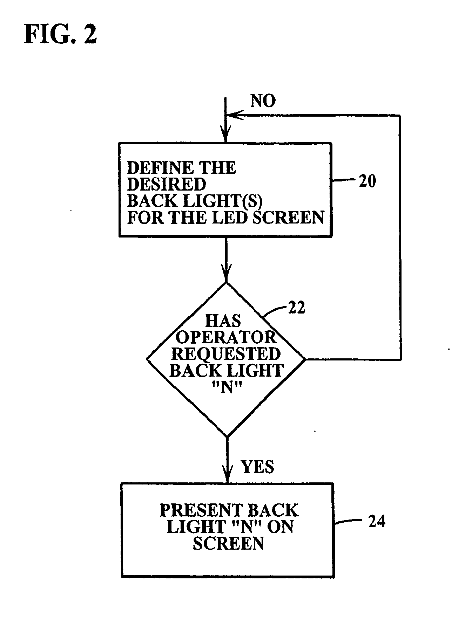

Back lights can be diffuse (white) or patterned. One common pattern is a black and white striped pattern where the light intensity moving in a selected direction, i.e. the light intensity across the pattern area, varies as a sinusoidal function between black and white and repeats every 6.35 mm (1/4 inch) for example. Referring to Figure 2, the first thing that is done (step 20) is to "Define The Desired Back Lights For The LCD Screen". There could be any number "N" of different back lights/patterns which could be selected. When the query "Has Operator Requested Back Light "N" (step 22) is answered in the affirmative, the control will "Present Back Light "N" On Screen" (step 24).

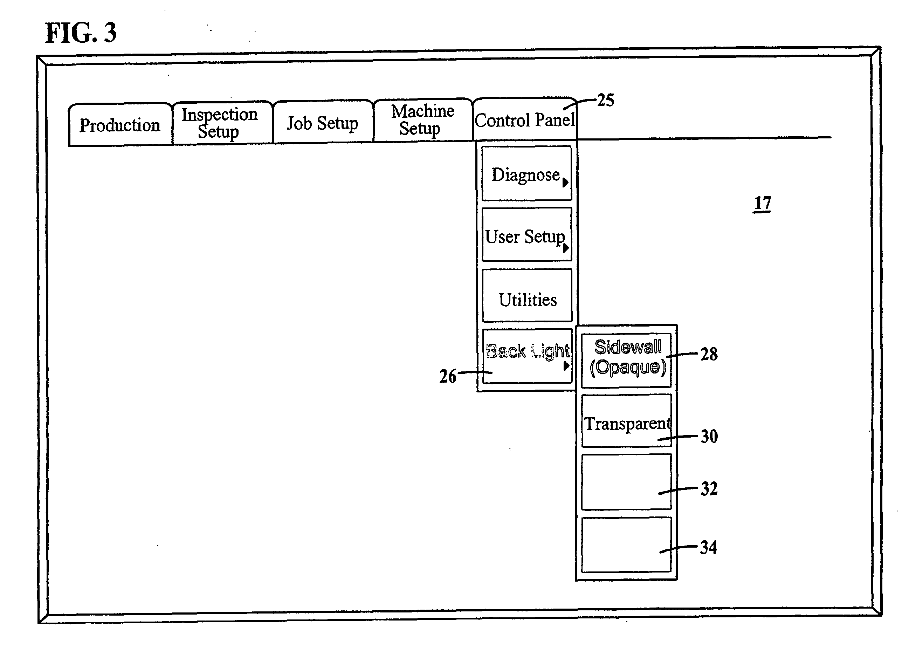

Figure 3 shows the screen 17 as it would be used by an operator to define a desired backlight on the screen. The Control Panel tab 25 is operated which presents a menu including the option "Back Light" 26. When this menu item is operated, a submenu is presented including: Sidewall (Opaque) 28 (a varigated or striped pattern, for example a brightness pattern varying repeatedly along an axis in a sinusoidal manner between black and white); Transparent 30 (a uniform, diffused or white light); and two other submenu locations 32,34 for additional back light choices. The operator touches the desired back light tab and the control illuminates the screen accordingly. The operator now has defined a convenient back light source which he can use to back light a bottle that he has removed from the conveyor, and would like to inspect by holding it in front of the screen.

## Claims

1. A machine (10) for inspecting a transparent container (12), comprising
a control system including a control (18) and a man-machine screen interface (17),
said control (18) comprising means defining a plurality of back lights (28, 30) for use in inspecting a transparent container,
said man-machine screen interface (17) including menu means (26) identifying a corresponding plurality of discrete back lights whereby an operator can select any one of the plurality of back lights so that an inspection of a transparent container with that selected back light can be performed,
**characterised in that** the control (18) is operable, in response to said selection by the operator, to define the selected back light (28, 30) on the man-machine screen interface (17) to enable the operator to perform a visual inspection of a transparent container (12) using the man-machine screen interface as a light source to back light the container.

2. A machine for inspecting a transparent container according to claim 1, wherein the back lights which can be defined include patterned (28) or diffuse (30) back lights.

3. A machine for inspecting a transparent container according to claim 1 or 2, wherein the discrete back lights which can be defined on the man-machine screen interface include sidewall (28) and transparent (30).

## Patentansprüche

1. Maschine (10) zum Prüfen eines transparenten Behältnis (12), umfassend
ein Steuersystem mit einer Steuerung (18) und einer Mensch-Maschine-Bildschirmschnittstelle (17), wobei
die Steuerung (18) eine Einrichtung zum Definieren einer Mehrzahl von Hintergrundbeleuchtungen (28, 30) zur Verwendung beim Prüfen eines transparenten Behälters definiert,
die Mensch-Maschine-Bildschirmschnittstelle (17) eine Menüeinrichtung (26) zum Identifizieren einer entsprechenden Mehrzahl von diskreten Hintergrundbeleuchtungen umfaßt, wobei ein Benutzer eine der Mehrzahl von Hintergrundbeleuchtungen auswählen kann, so daß eine Prüfung eines transparenten Behälters mit der ausgewählten Hintergrundbeleuchtung durchgeführt werden kann,
**dadurch gekennzeichnet, daß** die Steuerung (18) in Reaktion auf die Auswahl durch den Benutzer dahingehend betrieben werden kann, daß die ausgewählte Hintergrundbeleuchtung (28, 30) an der Mensch-Maschine-Bildschirmschnittstelle (17) definiert wird, um es dem Benutzer zu ermöglichen, unter Verwendung der Mensch-Maschine-Bildschirmschnittstelle als Lichtquelle für die Hintergrundbeleuchtung des Behälters eine Sichtprüfung eines transparenten Behälters (12) durchzuführen.

2. Maschine zum Prüfen eines transparenten Behälters nach Anspruch 1, wobei die Hintergrundbeleuchtung, die definiert werden kann, gemusterte (28) oder diffuse (30) Hintergrundbeleuchtungen umfaßt.

3. Maschine zur Prüfung eines transparenten Behälters nach Anspruch 1 oder 2, wobei die diskreten Hintergrundbeleuchtungen, die an der Mensch-Maschine-Schnittstelle definiert werden können, diffuse (28) und transparente (30) Hintergrundbeleuchtungen umfassen.

## Revendications

1. Machine (10) pour inspecter un récipient transparent (12), comprenant :
- un système de commande comprenant une commande(18) et une interface écran homme-machine {17) ;
- ladite commande (18) comprenant un moyen définissant une pluralité de lumières émises par l'arrière (28, 30) à utiliser dans l'inspection d'un récipient transparent ;
- ladite interface écran homme-machine (17) comprenant un moyen de menu (26) identifiant une pluralité correspondante de lumières émises par l'arrière discrètes de sorte que l'opérateur peut sélectionner l'une quelconque de la pluralité de lumières émises par l'arrière pour qu'une inspection d'un récipient transparent avec ces lumières émises par l'arrière sélectionnées puisse être réalisée ;
**caractérisée en ce que** la commande (18) peut fonctionner, en réponse à ladite sélection par l'opérateur, pour définir la lumière émise par l'arrière sélectionnée (28, 30) sur l'interface écran homme-machine (17) afin de permettre à l'opérateur de réaliser une inspection visuelle d'un récipient transparent (12) en utilisant l'interface écran homme-machine en tant que source de lumière pour éclairer par l'arrière le récipient.

2. Machine pour inspecter un récipient transparent selon la revendication 1, dans laquelle les lumières émises par l'arrière, qui peuvent être définies, comprennent des lumières émises par l'arrière dirigées (28) ou diffuses (30).

3. Machine pour inspecter un récipient transparent selon la revendication 1 ou 2, dans laquelle les lumières émises par l'arrière discrètes, qui peuvent être définies sur l'interface écran homme-machine, comprennent une paroi latérale (28) et transparente (30).
